# EUROPÄISCHE PATENTSCHRIFT

(11) **EP 3 377 660 B1**
(45) Veröffentlichungstag und Bekanntmachung des Hinweises auf die Patenterteilung: **24.06.2020**
(21) Anmeldenummer: 16801720.0
(22) Anmeldetag: 08.11.2016
(51) Int. Cl.: C22B 7/04, C21C 1/02, C21B 3/06, C21B 3/10

(54) **VERFAHREN ZUM REINIGEN VON SCHLACKE**
METHOD FOR CLEANING SLAG
PROCÉDÉ DE NETTOYAGE DE SCORIES

(30) Priorität: 19.11.2015 DE 102015222825; 02.03.2016 DE 102016002419; 02.08.2016 DE 102016214207
(43) Veröffentlichungstag der Anmeldung: 26.09.2018
(73) Patentinhaber: SMS Group GmbH, 40237 Düsseldorf (DE)
(72) Erfinder: KÖNIG, Roland, 45472 Mülheim a. d. Ruhr (DE); ODENTHAL, Hans-Jürgen, 40822 Mettmann (DE); KÖNEKE, Martin, 51375 Leverkusen (DE); NÖRTHEMANN, Ralf, 45549 Sprockhövel (DE); SCHÜRING, Andreas, 45475 Mülheim (DE); STRIEDER, Detlef, 47239 Duisburg (DE); STARKE, Peter, 47228 Duisburg (DE); IONITA, Mircea, 40629 Düsseldorf (DE); DEGEL, Rolf, 40880 Ratingen (DE); FRÖHLING, Christian, 40625 Düsseldorf (DE); OTERDOOM, Harmen Johannes, 40219 Düsseldorf (DE)
(74) Vertreter: Kross, Ulrich
(86) Internationale Anmeldenummer: PCT/EP2016/076953
(87) Internationale Veröffentlichungsnummer: WO 2017/084912

(56) Entgegenhaltungen:
- EP-A1- 0 627 012
- EP-A2- 1 640 462
- US-A- 4 720 837

## Beschreibung

Die Erfindung betrifft ein Verfahren zum Reinigen von Schlacke aus einem Nichteisenmetall (NE)- oder Eisenlegierung-Herstellungsprozess.

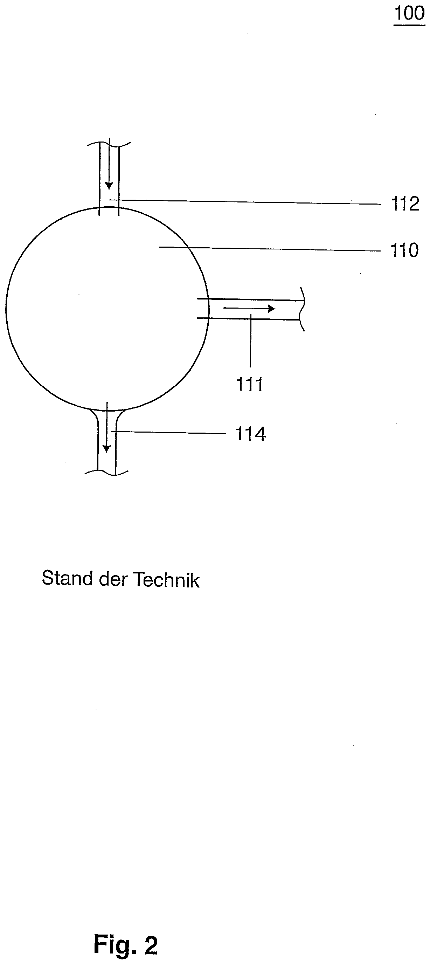

Im Stand der Technik sind derartige Verfahren und Vorrichtungen auch für die besagten Herstellungsprozesse grundsätzlich bekannt. Dazu wird - wie in Figur 2 gezeigt - die bei den besagten Herstellungsprozessen anfallende Schlacke typischerweise kontinuierlich über eine Schlackeneinlaufrinne 112 in einen Absetzofen 110 geleitet und dort aufgeheizt und metallurgisch behandelt. Die Behandlung dient dazu, den in der Schlacke noch enthaltenen Metallanteil zu reduzieren. Nach der Behandlung und einer entsprechenden Verweildauer der Schlacke in dem Absetzofen 110 setzt sich ein Teil der in der Schlacke enthaltenen Metalle als Metalllegierung oder als Matte, z.B. als Kupfermatte, am Boden des Absetzofens ab. Insofern zerfällt die ursprüngliche Schlacke in eine Metalllegierung und eine erste Restschlacke. Die Metalllegierung wird über eine Metallauslaufrinne 111 des Absetzofens 110 abgegossen, während die typischerweise auf der Metalllegierung aufschwimmende erste Restschlacke über eine Schlackenauslaufrinne 114 aus dem ersten Absetzofen 110 abgestochen wird.

Die Druckschrift EP 0 627 012 A1 offenbart ein Verfahren zur Entschwefelung von Eisenschmelzen, das sowohl für Roheisen wie auch für Gußeisen angewendet werden soll mittels einer Schlacke.

Die Druckschrift US 4,720,837 A offenbart eine Pfannenofenvorrichtung zum Raffinieren von geschmolzenem Stahl. Dabei werden flüssige Stahl und ein Schlackenbildner in die Pfannenofenvorrichtung eingebracht. In der Pfanne wird der Schlackenbildner durch Lichtbogenerhitzung verschlackt, wodurch der flüssige Stahl mittels der Schlacke gereinigt wird.

Traditionell endet die Reinigung von Schlacke aus einem NE- oder Eisenlegierungs-Herstellungsprozess an dieser Stelle. Die verbleibende erste Restschlacke weist jedoch immer noch einen Metallanteil von ≥ 0,5 Gew.-% auf. Dieser immer noch relativ hohe Metallanteil genügt modernen Anforderungen an den Umweltschutz nicht mehr, insbesondere wenn in der ersten Restschlacke noch giftige Schwermetallanteile enthalten sind.

Der Erfindung liegt die Aufgabe zugrunde, ein bekanntes Verfahren zur Reinigung von Schlacke aus einem NE- oder Eisenlegierung-Herstellungsprozess dahingehend weiterzubilden, dass die Schlacke weniger umweltschädlich ist und dass insbesondere der Metallanteil in der Schlacke weiter gesenkt wird.

Diese Aufgabe wird durch das Verfahren nach Patentanspruch 1 gelöst. Demnach erfolgt ein Abstechen der ersten Restschlacke in eine Pfanne; Analysieren der Zusammensetzung der ersten Restschlacke und Einbringen von mindestens einem gasförmigen Medium auf oder in die erste Restschlacke zum metallurgisch-physikalischen Reagieren zu einer zweiten Restschlacke in der Pfanne, wobei das gasförmige Medium in Abhängigkeit von der analysierten individuellen Zusammensetzung der ersten Restschlacke ausgewählt wird, und die zweite Restschlacke in der Pfanne zu einem zweiten Absetzofen transportiert wird; und Abgießen der zweiten Restschlacke aus der Pfanne in den zweiten Absetzofen, und die zweite Restschlacke für eine vorbestimmte Verweildauer in dem zweiten Absetzofen verweilt und sich dort beruhigt; und den Zerfall der zweiten Restschlacke während der Verweildauer in eine zweite Metalllegierung und eine dritte Restschlacke, wobei sich die zweite Metalllegierung am Boden des zweiten Absetzofens absetzt und die dritte Restschlacke auf der zweiten Metalllegierung aufschwimmt.

Der Begriff "Analysieren" meint typischerweise die Entnahme einer Probe aus der Schlacke sowie ein Analysieren der jeweils aktuellen metallurgisch / chemischen Zusammensetzung der Probe. Die Analyse kann evtl. einen längeren Zeitraum in Anspruch nehmen, so dass die Ergebnisse der Analyse erst am Ende dieses Zeitraums vorliegen. Die aufgrund der Analyse ermittelte Zusammensetzung der Probe entspricht dann evtl. nicht mehr genau der Zusammensetzung der Schlacke am Ende des besagten Zeitraums, weil zwischenzeitlich weitere Materialeinträge in die Schlacke stattgefunden haben können. Der Begriff "Analysieren" im Sinne der Erfindung schließt deshalb gegebenenfalls weiterhin auch eine Prognose mit ein, inwieweit sich die Zusammensetzung der Schlacke voraussichtlich während des Analyse-Zeitraums ändern wird, zum Beispiel aufgrund von während dieses Zeitraums erfolgten weiteren Einträgen in die Schlacke.

Der Begriff "Pfannenofen" wird hier verwendet im Sinne einer Schlacken-Behandlungsstation (Slag-Treatment-Station) STS.

Bei dem gasförmigen Medium im Sinne der Erfindung handelt es sich entweder um ein Gas oder um ein gasförmiges Trägermedium in Kombination mit staubförmigen oder feinkörnigen Stoffen; Stichwort: Kohlenstoffeinblasung. Das Einbringen des gasförmigen Mediums dient zum Intensivieren einer beabsichtigten (chemischen) Reaktion, zum Beispiel zum Homogenisieren oder besseren Vermischen der Schlacke oder zum Erzeugen von Turbulenz in der Schlacke bewirkt. Bei dem Gas bzw. dem gasförmigen Trägermedium kann es sich um ein Inertgas oder um Kohlendioxid handeln.

Je nach der individuellen Zusammensetzung der ersten Restschlacke und nach gewünschter chemischer bzw. metallurgisch-physikalischer Reaktion wird das mindestens eine gasförmige Medium derart ausgewählt, dass es seine Agglomeration von Metallpartikeln in der Schlacke, eine Reduktion der Schlacke und/oder eine Oxidation der Schlacke bewirkt.

Durch die beanspruchte Pfannen-Behandlung wird die ursprünglich in die Pfanne zugeführte erste Restschlacke in eine zweite Restschlacke umgewandelt. Diese zweite Restschlacke ist bereits aus Umweltsicht weniger schädlich als die erste Restschlacke, weil durch die besagte Behandlung ein Teil der in der ersten Restschlacke noch enthaltenen unerwünschten Bestandteile abgetrennt wurde, entweder durch Verdampfung oder durch Überführung/Absetzen in eine schwere Metallphase, die sich später am Boden des zweiten Absetzofens absetzt.

Der Beschreibung sind zwei Figuren beigefügt, wobei
Figur 1 eine zum Durchführen des erfindungsgemässen Verfahrens geeignete Vorrichtung; und
Figur 2 eine Vorrichtung nach dem Stand der Technik zeigt.

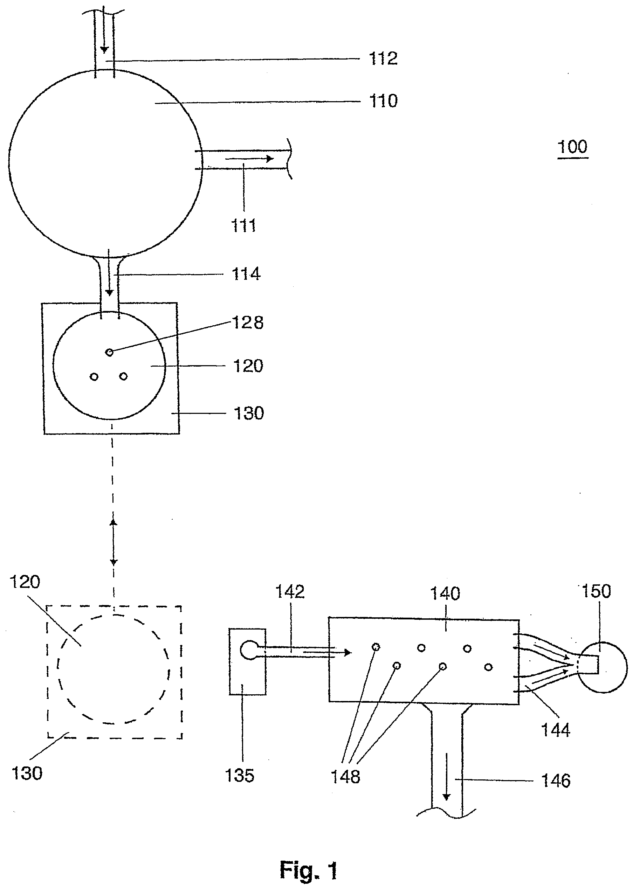

Die Erfindung wird nachfolgend unter Bezugnahme auf Figur 1 in Form von Ausführungsbeispielen näher beschrieben.

Die Erfindung setzt gemäß Figur 1 dort an, wo der oben unter Bezugnahme auf Figur 2 beschriebene Stand der Technik aufhört, nämlich beim Abstechen der ersten Restschlacke aus dem ersten Absetzofen 110 über die Schlackenauslaufrinne 114 in die Pfanne 120.

Das Abstechen der ersten Restschlacke aus einem NE- oder Eisenlegierungs-Herstellungsprozess in eine aus der Eisen- und Stahlindustrie grundsätzlich bekannten Pfanne 120 bewirkt zunächst, dass der in den ersten Absetzofen 110 noch kontinuierlich erfolgende Zufluss von Schlacke unterbrochen wird, weil das Abstechen der ersten Restschlacke diskontinuierlich erfolgt. Damit erfolgt ein Übergang in einen sogenannten "Batchbetrieb". Die Verwendung der Pfanne 120 zur Aufnahme der ersten Restschlacke bietet den Vorteil, dass die Pfanne als Transport- und Behandlungsgefäß für die weitere Behandlung der ersten Restschlacke bereits von Haus aus bestens geeignet ist. So verfügt sie typischerweise über Lanzenzugänge im Deckel, über seitliche Einblasmöglichkeiten oder über Bodenspülsteine, jeweils zum Eintrag von gasförmigen Medien.

Die Pfanne 120 kann auch als Pfannenofen oder als Kupfer-Raffinationsofen/Aufheizofen ausgebildet sein und ist als solcher bestens geeignet zur Aufheizung der ersten Restschlacke, um die metallurgisch-physikalische Reaktion der ersten Restschlacke mit dem gasförmigen Medium zu verbessern. Die Restschlacke wird vorzugsweise mit Elektroden 128 aufgeheizt, wie in Figur 1 gezeigt.

In der Pfanne können weiterhin Einführkanäle, das heißt eine Art von Beschickungsrohren, vorgesehen sein zum Zuführen von Additiven, wie beispielsweise Reduktionsmitteln oder Schlackenbildnern, in die erste Restschlacke, ebenfalls zum Unterstützen der metallurgisch-physikalischen Reaktion. Zur besseren Vermischung und Homogenisierung der Restschlacke kann das gasförmige Medium über eine von oben in die Schlacke eingetauchte Spüllanze, über seitliche Spüllanzen oder über Bodensteine in die Restschlacke eingebracht werden.

Durch die beschriebene Behandlung, die bevorzugt die Erzeugung von Turbulenzen in der Restschlacke zur Reaktionsbeschleunigung vorsieht, wird die ursprünglich in die Pfanne zugeführte erste Restschlacke in eine zweite Restschlacke umgewandelt. Diese zweite Restschlacke ist bereits aus Umweltsicht weniger schädlich als die erste Restschlacke, weil durch die besagte Behandlung ein Teil der in der ersten Restschlacke noch enthaltenen unerwünschten Bestandteile abgetrennt wurde, z.B. durch Verdampfung oder durch Überführung/ Absetzung in eine schwere Metallphase.

Um die zweite Restschlacke jedoch im Hinblick auf Umweltschutzaspekte noch weiter zu verbessern, insbesondere um ein Absetzen der schweren Metallphase zu ermöglichen, sieht das erfindungsgemäße Verfahren optional weiterhin vor, dass die Pfanne 120 mit der zweiten Restschlacke beispielsweise mit Hilfe eines Wagens 130 oder mit Hilfe eines Krans (nicht gezeigt) zu einem zweiten Absetzofen 140 transportiert wird und dass die zweite Restschlacke dann aus der Pfanne 120 in den zweiten Absetzofen 140 abgegossen wird.

Das Abgießen erfolgt beispielsweise mit Hilfe eines Kippstuhls 135 über eine Schlackeneinlaufrinne 142. In dem zweiten Absetzofen 140, bei dem es sich typischerweise um einen Reduktionsofen (Submerged-Arc-Furnace SAF), handelt, soll die zweite Restschlacke zur Ruhe kommen, indem sie dort für eine vorbestimmte Verweildauer verweilt. Während der Verweildauer setzt sich am Boden des zweiten Absetzofens 140 zumindest ein Teil der noch in der zweiten Restschlacke enthaltenen Metalle als zweite Metalllegierung ab, während eine verbleibende dritte Restschlacke typischerweise oben auf der zweiten Metalllegierung aufschwimmt. Nach der Verweildauer kann die dritte Restschlacke über eine Schlackenauslaufrinne 144 z. B. in einen Kübel 150 oder in eine Granulation abgestochen werden. Die zweite Metalllegierung wird dagegen über einen Auslauf 146 abgestochen separat zu der dritten Restschlacke.

Während ihrer Verweildauer in dem zweiten Absetzofen 140 wird die zweite Restschlacke vorzugsweise auf einer konstanten Temperatur gehalten. Zu diesem Zweck kann ein Eintrag von Wärmeenergie in den zweiten Absetzofen 140 erfolgen. Dieser Eintrag der Wärmeenergie erfolgt vorzugsweise über eine Mehrzahl von kleineren Elektroden 148 mit einem Durchmesser kleiner 900mm, welche in die Schlacke des zweiten Absetzofens hineinragen. Die Elektroden 148 können entweder entlang einer geraden Linie oder jeweils gegenüber der geraden Linie versetzt in einer Zick-Zack-Form angeordnet sein. Die gerade Linie erstreckt sich vorzugsweise entlang oder parallel zu der Längsseite eines vorzugsweise rechteckförmigen Gefäßes des zweiten Absetzofens. Die Mehrzahl von kleineren Elektroden bietet den Vorteil, dass sie die Restschlacke weniger stark aufmischt bzw. verwirbelt als eine einzelne große Elektrode, und deshalb eine bessere Wärmekonservierung ermöglicht. Der zweite Absetzofen 140 kann mit Gleich- oder mit Wechselstrom betrieben werden. Bei kleineren Schlackeneinträgen und damit kleineren Abmessungen des zweiten Absetzofens 140 kann aber eine Ausstattung mit 3 größeren Elektroden konstruktiv einfacher und wirtschaftlicher sein.

Vorteilhafterweise beinhaltet die dritte Restschlacke nur noch einen Metallanteil von unter 0,5 Gew.-%, insbesondere an Schwermetallen, und ist damit wesentlich umweltschonender zu entsorgen, als die erste oder die zweite Restschlacke.

### Bezugszeichenliste

- 100: Vorrichtung
- 110: erster Absetzofen
- 111: Metallauslaufrinne erster Absetzofen
- 112: Schlackeneinlaufrinne erster Absetzofen
- 114: Schlackenauslaufrinne erster Absetzofen
- 120: Pfanne
- 128: Elektroden der Pfanne
- 130: Kran oder Wagen
- 135: Kippstuhl
- 140: zweiter Absetzofen
- 142: Schlackeneinlaufrinne zweiter Absetzofen
- 144: Schlackenauslaufrinne zweiter Absetzofen
- 146: Metallauslauf zweiter Absetzofen
- 148: Elektroden
- 150: Kübel

## Patentansprüche

1. Verfahren zum Reinigen von Schlacke, wie sie in einem NE- oder Eisenlegierung- Herstellungsprozess anfällt, aufweisend folgende Schritte:
Aufheizen und Behandeln der Schlacke in einem ersten Absetzofen (110), um eine erste Metalllegierung und eine erste Restschlacke zu erhalten;
**gekennzeichnet durch** :
Abstechen der ersten Restschlacke in eine Pfanne (120);
Analysieren der Zusammensetzung der ersten Restschlacke; und
Einbringen von mindestens einem gasförmigen Medium auf oder in die erste Restschlacke zum metallurgisch-physikalischen Reagieren zu einer zweiten Restschlacke in der Pfanne (120), wobei das gasförmige Medium in Abhängigkeit von der analysierten individuellen Zusammensetzung der ersten Restschlacke ausgewählt wird;
Transportieren der zweiten Restschlacke in der Pfanne (120) zu einem zweiten Absetzofen (140); und
Abgießen der zweiten Restschlacke aus der Pfanne (120) in den zweiten Absetzofen (140), wobei die zweite Restschlacke für eine vorbestimmte Verweildauer in dem zweiten Absetzofen (140) verweilt und sich dort beruhigt; und
den Zerfall der zweiten Restschlacke während der Verweildauer in eine zweite Metalllegierung und eine dritte Restschlacke, wobei sich die zweite Metalllegierung am Boden des zweiten Absetzofens (140) absetzt und die dritte Restschlacke auf der zweiten Metalllegierung aufschwimmt.

2. Verfahren nach Anspruch 1,
**dadurch gekennzeichnet,**
**dass** die erste Restschlacke noch einen Metallanteil von 0,5 Gew.-% oder mehr enthält.

3. Verfahren nach einem der vorangegangenen Ansprüche,
**dadurch gekennzeichnet,**
**dass** das gasförmige Medium von oben auf die erste Restschlacke aufgebracht wird oder im Innern der Pfanne (120) in die erste Restschlacke eingeblasen wird.

4. Verfahren nach einem der vorangegangenen Ansprüche;
**dadurch gekennzeichnet,**
**dass** die erste Restschlacke in der als Pfannenofen oder Kupfer-Raffinations- /Aufheizofen ausgebildeten Pfanne (120) zum Unterstützen der metallurgisch-physikalischen Reaktion vorzugsweise chemisch oder elektrisch erwärmt wird.

5. Verfahren nach einem der vorangegangenen Ansprüche;
**dadurch gekennzeichnet,**
**dass** der ersten Restschlacke in der Pfanne (120) ein Additiv in Form eines Reduktionsmittels und/oder eines Schlackenbildners zugesetzt wird zum Unterstützen der metallurgisch-physikalischen Reaktion.

6. Verfahren nach Anspruch 1,
**dadurch gekennzeichnet,**
**dass** die dritte Restschlacke in einen Kübel (150) oder in eine Granulation abgestochen wird; und
die zweite Metalllegierung separat dazu abgestochen wird.

7. Verfahren nach Anspruch 1,
**dadurch gekennzeichnet,**
**dass** der zweiten Restschlacke in dem zweiten Absetzofen (140) nur soviel Wärmeenergie zugeführt wird, dass die Temperatur der zweiten Restschlacke im Wesentlichen konstant bleibt, wobei die Zufuhr der Wärmeenergie vorzugsweise über eine Mehrzahl von Elektroden (148) erfolgt, welche in die Schlacke des zweiten Absetzofens hineinragen.

8. Verfahren nach der Anspruch 6,
**dadurch gekennzeichnet,**
**dass** die dritte Restschlacke nur noch einen Metallanteil von weniger als 0,5 Gew.-% aufweist.

## Claims

1. Method for cleaning slag such as arises in an NE or iron alloying production process, comprising the following steps:
heating and treating the slag in a first settling furnace (110) so as to obtain a first metal alloy and a first residual slag;
**characterised by**:
tapping-off the first residual slag into a ladle (120);
analysing the composition of the first residual slag; and
introducing at least one gaseous medium onto or into the first residual slag for metallurgical/physical reaction to form a second residual slag in the ladle (120), wherein the gaseous medium is selected in dependence on the analysed individual composition of the first residual slag;
transporting the second residual slag in the ladle (120) to a second settling furnace (140); and
pouring the second residual slag from the ladle (120) into the second settling furnace (140), wherein the second residual slag resides for a predetermined dwell time in the second settling furnace (140) and settles there; and
breaking down of the second residual slag during the dwell time into a second metal alloy and a third residual slag, wherein the second metal alloy settles at the base of the second settling furnace (140) and the third residual slag floats on the second metal alloy.

2. Method according to claim 1,
**characterised in that**
the first residual slag still contains a metal proportion of 0.5 weight percent or more.

3. Method according to one of the preceding claims,
**characterised in that**
the gaseous medium is brought from above onto the first residual slag or is injected in the interior of the ladle (120) into the first residual slag.

4. Method according to any one of the preceding claims,
**characterised in that**
the first residual slag is heated in the ladle (120), which is constructed as a ladle furnace or a copper refining/heating furnace, so as to assist the metallurgical/physical reaction, preferably chemically or electrically.

5. Method according to any one of the preceding claims,
**characterised in that**
an additive in the form of a reducing agent and/or a slag former is added to the first residual slag in the ladle (120) so as to assist the metallurgical/physical reaction.

6. Method according to claim 1,
**characterised in that**
the third residual slag is tapped off into a tub (150) or into granulating means; and
the second metal alloy is tapped off separately therefrom.

7. Method according to claim 1,
**characterised in that**
only so much thermal energy is added to the second residual slag in the second settling furnace (140) that the temperature of the second residual slag remains substantially constant, wherein the supply of thermal energy is carried out preferably by way of a plurality of electrodes (148) which project into the slag of the second settling furnace.

8. Method according to claim 6,
**characterised in that**
the third residual slag retains only a metal proportion of less than 0.5 weight percent.

## Revendications

1. Procédé pour le nettoyage du laitier tel qu'il s'accumule dans un procédé de fabrication d'alliages ferreux ou non-ferreux, présentant les étapes suivantes dans lesquelles :
on chauffe et on traite le laitier dans un premier four de décantation (110) afin d'obtenir un premier alliage métallique et un premier laitier résiduel ;
**caractérisé par** le fait de :
soutirer le premier laitier résiduel dans une poche (120) ;
analyser la composition du premier laitier résiduel ; et
introduire au moins un milieu gazeux sur ou dans le premier laitier résiduel dans le but de déclencher une réaction de type métallurgique-physique afin d'obtenir un deuxième laitier résiduel dans la poche (120) ; dans lequel le milieu gazeux est sélectionné en fonction de la composition individuelle analysée du premier laitier résiduel ;
transporter le deuxième laitier résiduel dans la poche (120) en direction d'un deuxième four de décantation (140) ; et
déverser le deuxième laitier résiduel hors de la poche (120) dans le deuxième four de décantation (140) ; dans lequel le deuxième laitier résiduel séjourne pendant un laps de temps prédéfini dans le deuxième four de décantation (140) et s'y stabilise ; et
désagréger le deuxième laitier résiduel au cours du temps de séjour afin d'obtenir un deuxième alliage métallique et un troisième laitier résiduel ; dans lequel le deuxième alliage métallique se dépose sur la base du deuxième four de décantation (140) et le troisième laitier résiduel flotte sur le deuxième alliage métallique.

2. Procédé selon la revendication 1, **caractérisé en ce que** le premier laitier résiduel contient encore une fraction métallique qui s'élève à 0,5 % en poids ou plus.

3. Procédé selon l'une quelconque des revendications précédentes, **caractérisé en ce que** l'on applique le milieu gazeux à partir du haut sur le premier laitier résiduel ou bien on l'insuffle à l'intérieur de la poche (120) dans le premier laitier résiduel.

4. Procédé selon l'une quelconque des revendications précédentes, **caractérisé en ce que** l'on chauffe, de préférence par voie chimique ou par voie électrique, le premier laitier résiduel dans la poche (120) réalisée sous la forme d'un four-poche ou d'un four de raffinage/chauffage du cuivre, dans le but de supporter la réaction de type métallurgique-physique.

5. Procédé selon l'une quelconque des revendications précédentes, **caractérisé en ce que** l'on ajoute au premier laitier résiduel dans la poche (120) un additif sous la forme d'un agent de réduction et/ou sous la forme d'un formateur de laitier dans le but de supporter la réaction de type métallurgique-chimique.

6. Procédé selon la revendication 1, **caractérisé en ce que** l'on soutire le troisième laitier résiduel dans une cuve (150) ou dans un dispositif de transformation en granulés et on soutire le deuxième alliage métallique, de manière séparée.

7. Procédé selon la revendication 1, **caractérisé en ce que** l'on achemine au deuxième laitier résiduel dans le deuxième four de décantation (140) uniquement une quantité d'énergie thermique telle que le deuxième laitier résiduel reste essentiellement constant ; dans lequel l'acheminement de l'énergie thermique a lieu de préférence par l'intermédiaire d'une multitude d'électrodes (148) que l'on fait pénétrer dans le laitier du deuxième four de décantation.

8. Procédé selon la revendication 6, **caractérisé en ce que** le troisième laitier résiduel ne présente plus qu'une fraction métallique qui est inférieure à 0,5 % en poids.
